# EUROPEAN PATENT APPLICATION

(11) **EP 3 527 796 A1**
(43) Date of publication of application: **21.08.2019**
(21) Application number: 19157274.2
(22) Date of filing: 14.02.2019
(51) Int. Cl.: F01N 3/20, F01N 9/00, F01N 11/00, B01D 53/94

(54) **ABNORMALITY DIAGNOSIS APPARATUS AND VEHICLE**

(30) Priority: 15.02.2018 JP 2018024899
(71) Applicant: Toyota Jidosha Kabushiki Kaisha, Toyota-shi, Aichi-ken 471-8571 (JP)
(72) Inventor: TAKADA, Keishi, Toyota-shi, Aichi-ken 471-8571 (JP); SAKUMA, Tetsuya, Toyota-shi, Aichi-ken 471-8571 (JP); NISHIOKA, Hiromasa, Toyota-shi, Aichi-ken 471-8571 (JP)
(74) Representative: D Young & Co LLP

(57) **Abstract**

An abnormality diagnosis apparatus for an exhaust gas control apparatus. The abnormality diagnosis apparatus includes: an adsorption amount detector (30) which detects an actual adsorption amount (QNH3M) that is an amount of ammonia actually adsorbed in a catalyst (3); and an electronic control unit (15) configured to: i) estimate an estimated adsorption amount (QNH3) that is an ammonia adsorption amount in the catalyst (3) on an assumption that an ammonia supply apparatus (4) is normal; and ii) execute an abnormality diagnosis in which the ammonia supply apparatus (4) is diagnosed as being abnormal, in a case where the estimated adsorption amount (QNH3) is equal to or smaller than a predetermined adsorption amount (Ql) and where a difference between the estimated adsorption amount (QNH3) and the actual adsorption amount (QNH3M) is larger than a threshold (QC1).

## Description

### BACKGROUND OF THE INVENTION

### 1. Field of the Invention

The invention relates to an abnormality diagnosis apparatus and a vehicle.

### 2. Description of Related Art

There is known a selective reduction type NOx catalyst (hereinafter, referred to as merely a "NOx catalyst" or a "catalyst") that reduces NOx contained in exhaust gas from an internal combustion engine using ammonia as a reductant. An addition valve or the like for adding ammonia or a precursor of ammonia to the exhaust gas is provided on the upstream side of the NOx catalyst. Examples of the precursor of ammonia include urea.

Here, NOx reduction efficiency decreases with the progress of deterioration in the NOx catalyst, and therefore, the deterioration in the NOx catalyst is diagnosed in an in-vehicle state (on-board state). Hereinafter, the diagnosis of the deterioration in the NOx catalyst is also referred to as abnormality diagnosis. For example, the abnormality diagnosis for the NOx catalyst can be executed focusing on the fact that the ammonia adsorption performance of the NOx catalyst decreases with the progress of deterioration in the NOx catalyst. Japanese Patent Application Publication No. 2009-127496 (JP 2009-127496 A) describes that ammonia is supplied such that ammonia is slipped out of the NOx catalyst, and determines that an ammonia adsorption amount in the NOx catalyst reaches an upper limit at the time when ammonia is slipped out of the NOx catalyst, and the abnormality diagnosis for the NOx catalyst is executed based on the ammonia adsorption amount at this time. In this technology, the ammonia adsorption amount is calculated from the amount of the supplied ammonia, and when the ammonia adsorption amount is equal to or smaller than a threshold, the NOx catalyst is diagnosed as deterioration.

### SUMMARY OF THE INVENTION

In the technology according to JP 2009-127496 A, it is necessary to supply ammonia until ammonia is slipped out of the NOx catalyst, and therefore, there is a possibility that the ammonia slipped out of the NOx catalyst is emitted to the atmosphere. Further, in the case where an ammonia supply apparatus is abnormal, the timing when ammonia is slipped out of the NOx catalyst changes depending on the degree of the abnormality. Therefore, although the abnormality diagnosis can be executed similarly, in this case, there is a possibility that the ammonia slipped out of the NOx catalyst is emitted to the atmosphere.

The invention provides an abnormality diagnosis apparatus and a vehicle, both of which is able to execute an abnormality diagnosis while restraining ammonia from flowing out of the NOx catalyst.

A first aspect of the present invention relates to an abnormality diagnosis apparatus for an exhaust gas control apparatus, the exhaust gas control apparatus including a catalyst which is provided in an exhaust passage of an internal combustion engine and reduces NOx via selective catalytic reduction using ammonia, and an ammonia supply apparatus which supplies ammonia to the catalyst, the abnormality diagnosis apparatus comprising: an adsorption amount detector which detects an actual adsorption amount that is an amount of ammonia actually adsorbed in the catalyst; and an electronic control unit configured to: estimate an estimated adsorption amount that is an ammonia adsorption amount in the catalyst on an assumption that the ammonia supply apparatus is normal; and execute an abnormality diagnosis in which the ammonia supply apparatus is diagnosed as being abnormal, in a case where the estimated adsorption amount is equal to or smaller than a predetermined adsorption amount and where a difference between the estimated adsorption amount and the actual adsorption amount is larger than a threshold.

In the case where the NOx catalyst is abnormal, the amount of ammonia that can be adsorbed decreases. Further, in the case where the ammonia supply apparatus is abnormal, the amount of ammonia that is supplied per unit time decreases. In both cases, the amount of ammonia that is adsorbed in the NOx catalyst decreases. The adsorption amount detector, for example, generates a microwave, detects a resonance frequency of the microwave, and detects the ammonia adsorption amount based on a correlation between the resonance frequency and the ammonia adsorption amount. Accordingly, it is possible to detect the ammonia adsorption amount in the NOx catalyst, even when ammonia is not supplied until ammonia flows out of the NOx catalyst, unlike the related art. Meanwhile, if the NOx catalyst and the ammonia supply apparatus are normal, the ammonia adsorption amount has correlation with the supply amount of ammonia, the temperature of exhaust gas (or the temperature of the NOx catalyst) and the flow rate of the exhaust gas, for example. Therefore, based on these values, it is possible to estimate the ammonia adsorption amount. Here, if the NOx catalyst and the ammonia supply apparatus are normal, there is hardly difference between the ammonia adsorption amount (estimated adsorption amount) estimated and the ammonia adsorption amount (actual adsorption amount) detected by the adsorption amount detector. On the other hand, if the ammonia supply apparatus is abnormal, there is a difference between the estimated adsorption amount and the actual adsorption amount. Here, also in the case where the NOx catalyst is abnormal, the difference between the estimated adsorption amount and the actual adsorption amount is generated. However, the time point when the difference between the estimated adsorption amount and the actual adsorption amount is generated is earlier in the case where the ammonia supply apparatus is abnormal than in the case where the NOx catalyst is abnormal.

In the case where the NOx catalyst is abnormal and where the actual adsorption amount is relatively small, most of ammonia that is supplied from the ammonia supply apparatus is adsorbed in the NOx catalyst, and therefore, there is hardly difference between the estimated adsorption amount and the actual adsorption amount. Even in the case where the NOx catalyst is abnormal and where the actual adsorption amount is so small that there is no difference between the estimated adsorption amount and the actual adsorption amount, the difference between the estimated adsorption amount and the actual adsorption amount is generated by an amount of decrease in the ammonia supply amount when the ammonia supply apparatus is abnormal. Accordingly, in the case where an estimated adsorption amount is so small that the difference between the estimated adsorption amount and the actual adsorption amount is not generated even if the NOx catalyst is abnormal, the estimated adsorption amount and the actual adsorption amount are compared. Then, in the case where the difference is larger than the threshold, it is possible to diagnose at least the ammonia supply apparatus as being abnormal. The threshold is set to a value when the ammonia supply apparatus is normal. The threshold may be changed depending on the estimated adsorption amount or the temperature of the NOx catalyst. The predetermined adsorption amount may be an upper limit of the estimated adsorption amount or the actual adsorption amount that allows the difference between the estimated adsorption amount and the actual adsorption amount not to be generated or allows the difference between the estimated adsorption amount and the actual adsorption amount to be in a range of an acceptable error, in a case where the NOx catalyst is abnormal and where the ammonia supply apparatus is normal. As described above, in the case where the estimated adsorption amount is equal to or smaller than the predetermined adsorption amount, the difference between the estimated adsorption amount and the actual adsorption amount is generated due to the abnormality of the ammonia supply apparatus. Accordingly, in the case where the estimated adsorption amount is equal to or smaller than the predetermined adsorption amount, it is possible to diagnose the abnormality of the ammonia supply apparatus by comparing the estimated adsorption amount and the actual adsorption amount. On this occasion, it is not necessary to supply ammonia to the NOx catalyst until ammonia is slipped out of the NOx catalyst, thus it is possible to restrain ammonia from flowing out of the NOx catalyst. The case where the ammonia supply apparatus is diagnosed as being abnormal includes a case where only the ammonia supply apparatus is abnormal and a case where both the ammonia supply apparatus and the NOx catalyst are abnormal. The ammonia supply apparatus may be diagnosed as being abnormal at the time when the difference between the estimated adsorption amount and the actual adsorption amount becomes larger than the threshold, or the ammonia supply apparatus may be diagnosed as being abnormal when the difference between the estimated adsorption amount and the actual adsorption amount is larger than the threshold at a predetermined timing.

In the above aspect, the abnormality diagnosis apparatus may further include a temperature sensor configured to acquire a temperature of the catalyst, wherein the electronic control unit is configured to execute the abnormality diagnosis, in a case where the estimated adsorption amount is equal to or smaller than the predetermined adsorption amount and where the temperature of the catalyst acquired by the temperature sensor is equal to or lower than a predetermined temperature.

The predetermined temperature is a temperature at which the accuracy of the abnormality diagnosis is in an acceptable range even when ammonia is desorbed from the NOx catalyst by influence of the temperature, or a temperature at which ammonia is not desorbed from the NOx catalyst. In the case where the temperature of the NOx catalyst is higher than the predetermined temperature, ammonia is desorbed from the NOx catalyst, so that the estimated adsorption amount and the actual adsorption amount are relatively small. Therefore, even when the ammonia supply apparatus is abnormal, the difference between the estimated adsorption amount and the actual adsorption amount is small, so that the accuracy of the abnormality diagnosis can decrease. On the other hand, in the case where the temperature of the NOx catalyst is equal to or lower than the predetermined temperature, the desorption of ammonia is restrained. Therefore, when the ammonia supply apparatus is abnormal in this case, the difference between the estimated adsorption amount and the actual adsorption amount is large. By executing the abnormality diagnosis at this time, the accuracy of the abnormality is improved.

In the above aspect, the electronic control unit may be configured to estimate that the estimated adsorption amount is zero, in a case where the temperature of the catalyst rises to equal to or higher than an ammonia desorption temperature.

When the temperature of the NOx catalyst reaches the ammonia desorption temperature, the adsorption of ammonia in the NOx catalyst cannot be kept. Accordingly, in the case where the temperature of the NOx catalyst rises to a temperature equal to or higher than the ammonia desorption temperature, it is possible to estimate that the estimated adsorption amount is zero. By calculating the estimated adsorption amount in this state, it is possible to increase the accuracy of the estimated adsorption amount. The temperature of the NOx catalyst can reach the ammonia desorption temperature, for example, in the case of performing regeneration of a filter being provided in the exhaust passage, in the case where a storage reduction type NOx catalyst is provided in the exhaust passage and the storage reduction type NOx catalyst is recovered from sulfur poisoning, or in the case where the internal combustion engine is operated at a high load.

In the above first aspect, the electronic control unit may be configured to increase a supply amount of ammonia from the ammonia supply apparatus, in a case where the ammonia supply apparatus is diagnosed as being abnormal, compared to a case where the ammonia supply apparatus is diagnosed as being normal.

The electronic control unit sends a command to the ammonia supply apparatus such that a required amount of ammonia is supplied from the ammonia supply apparatus. However, in the case where the ammonia supply apparatus is abnormal, even when the electronic control unit sends the command to the ammonia supply apparatus in order to supply the ammonia by the required ammonia amount, the amount of ammonia to be actually supplied from the ammonia supply apparatus becomes smaller than the required ammonia amount. In this case, the electronic control unit sends a command to the ammonia supply apparatus so as to further increase the amount of ammonia to be supplied from the ammonia supply apparatus. Thereby, the amount of ammonia to be actually supplied can get close to the required ammonia amount. As a result, it is possible to restrain a shortage of ammonia in the NOx catalyst. Thereafter, the difference between the estimated adsorption amount and the actual adsorption amount becomes hard to be generated.

In the above aspect, the electronic control unit may be configured to increase the supply amount of ammonia, based on a ratio between the estimated adsorption amount and the actual adsorption amount.

In the case where the amount of ammonia to be actually supplied decreases with respect to the required ammonia amount, the actual adsorption amount decreases with respect to the estimated adsorption amount according by an amount of the decrease of the amount of ammonia to be actually supplied,. Therefore, the ratio between the required ammonia amount and the amount of ammonia to be actually supplied is nearly equal to the ratio between the estimated adsorption amount and the actual adsorption amount. Accordingly, in the case of correcting the ammonia supply amount based on the ratio (the estimated adsorption amount / the actual adsorption amount) between the estimated adsorption amount and the actual adsorption amount, the amount of ammonia to be actually supplied can get close to the required ammonia amount.

In the above aspect, after the supply amount of ammonia from the ammonia supply apparatus is increased, the electronic control unit may be configured to diagnose the catalyst as being abnormal, in a case where the estimated adsorption amount becomes larger than the predetermined adsorption amount and where the difference between the estimated adsorption amount and the actual adsorption amount is larger than a second threshold.

In the case where the NOx catalyst is abnormal, when the estimated adsorption amount becomes larger than the predetermined adsorption amount, ammonia becomes hard to be adsorbed in the NOx catalyst with increase in the actual adsorption amount. Therefore, the difference between the estimated adsorption amount and the actual adsorption amount is enlarged. On this occasion, even when the ammonia supply apparatus is abnormal, the abnormality of the ammonia supply apparatus has less influence on the difference between the estimated adsorption amount and the actual adsorption amount, because the supply amount of ammonia is corrected. Accordingly, on this occasion, in the case where the difference between the estimated adsorption amount and the actual adsorption amount is larger than the second threshold, it is possible to diagnose the NOx catalyst as being abnormal. The second threshold is set to a value when the NOx catalyst is normal. The NOx catalyst may be diagnosed as being abnormal at the time when the difference between the estimated adsorption amount and the actual adsorption amount becomes larger than the second threshold, or the NOx catalyst may be diagnosed as being abnormal when the difference between the estimated adsorption amount and the actual adsorption amount is larger than the second threshold at a predetermined timing.

In the above first aspect, the electronic control unit may be configured to diagnose the catalyst as being abnormal, in a case where the estimated adsorption amount is larger than the predetermined adsorption amount and where the difference between the estimated adsorption amount and the actual adsorption amount is larger than a second threshold.

In the case where the ammonia supply apparatus is normal, even when the NOx catalyst is abnormal, there is hardly difference between the estimated adsorption amount and the actual adsorption amount until the estimated adsorption amount reaches the predetermined adsorption amount. Meanwhile, in the case where the difference between the estimated adsorption amount and the actual adsorption amount becomes larger than the second threshold after the estimated adsorption amount becomes larger than the predetermined adsorption amount, the ammonia supply apparatus can be diagnosed as being normal and the NOx catalyst can be diagnosed as being abnormal. Also in this case, the second threshold is set to a value when the NOx catalyst is normal.

In the above first aspect, the electronic control unit may be configured to diagnose the catalyst as being abnormal, in a case where the ammonia supply apparatus is diagnosed as being abnormal, where the estimated adsorption amount is larger than the predetermined adsorption amount and where the difference between the estimated adsorption amount and the actual adsorption amount is larger than a second threshold.

Even in the case where the ammonia supply apparatus is abnormal and where the supply amount of ammonia from the ammonia supply apparatus is not increased, the difference in the actual adsorption amount is generated between a case in which the NOx catalyst is normal and a case in which the NOx catalyst is abnormal after elapse of a sufficient time. That is, in the case where the difference between the estimated adsorption amount and the actual adsorption amount becomes larger than the second threshold after the ammonia supply apparatus is diagnosed as being abnormal, the ammonia supply apparatus is diagnosed as being abnormal and the NOx catalyst is diagnosed as being abnormal. Also in this case, the second threshold is set to a value when the NOx catalyst is normal.

In the above first aspect, the predetermined adsorption amount may be an upper limit of the estimated adsorption amount or the actual adsorption amount that allows the difference between the estimated adsorption amount and the actual adsorption amount not to be generated or allows the difference between the estimated adsorption amount and the actual adsorption amount to be in a predetermined range, in a case where the catalyst is abnormal and where the ammonia supply apparatus is normal.

In the case where the estimated adsorption amount is equal to or smaller than the predetermined adsorption amount, it is possible to diagnose the abnormality of the ammonia supply apparatus by comparing the estimated adsorption amount and the actual adsorption amount. On this occasion, it is not necessary to supply ammonia to the NOx catalyst until ammonia is slipped out of the NOx catalyst, thus it is possible to restrain ammonia from flowing out of the NOx catalyst.

A second aspect of the present invention relates to a vehicle including: an internal combustion engine; a catalyst which is provided in an exhaust passage of the internal combustion engine and reduces NOx via selective catalytic reduction using ammonia; an ammonia supply apparatus which supplies ammonia to the catalyst; an adsorption amount detector which detects an actual adsorption amount that is an amount of ammonia actually adsorbed in the catalyst; and an electronic control unit configured to: estimate an estimated adsorption amount that is an ammonia adsorption amount in the catalyst on an assumption that the ammonia supply apparatus is normal; and diagnose the ammonia supply apparatus as being abnormal, in a case where the estimated adsorption amount is equal to or smaller than a predetermined adsorption amount and where a difference between the estimated adsorption amount and the actual adsorption amount is larger than a threshold.

With the invention, it is possible to execute the abnormality diagnosis while restraining ammonia from flowing out of the NOx catalyst.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram showing a schematic configuration of an internal combustion engine, an intake system and an exhaust system according to an embodiment;
FIG. 2 is a diagram showing a relation between the frequency of a microwave to be transmitted by an adsorption amount detection apparatus and the transmittance of the microwave;
FIG. 3 is a diagram showing a relation between an actual adsorption amount and a change amount of a resonance frequency;
FIG. 4 is a block diagram for evaluating an estimated adsorption amount in a NOx catalyst;
FIG. 5 is a time chart showing a transition of an ammonia adsorption amount in the NOx catalyst;
FIG. 6 is a diagram for arranging relations of a line L1, a line L2 and a line L3 corresponding to a case in which the NOx catalyst and an addition valve are normal and a case in which the NOx catalyst and an addition valve are abnormal;
FIG. 7 is a time chart showing a transition of the estimated adsorption amount and the actual adsorption amount when the supply amount of ammonia from the addition valve is increased at time T1;
FIG. 8 is a diagram for arranging relations of the line L1, the line L3, a line L4 and a line L5 corresponding to cases in which the NOx catalyst and the addition valve are normal or abnormal;
FIG. 9 is a flowchart showing a flow of an abnormality diagnosis control according to the embodiment; and
FIG. 10 is a flowchart showing a flow of the abnormality diagnosis control according to the embodiment.

### DETAILED DESCRIPTION OF EMBODIMENTS

Hereinafter, with reference to the drawings, as an example, a mode for carrying out the invention will be described in detail, based on an embodiment. Unless otherwise mentioned, it is not intended that the scope of the invention is limit only to dimensions, materials, shapes and relative dispositions of constituent components described in the embodiment.

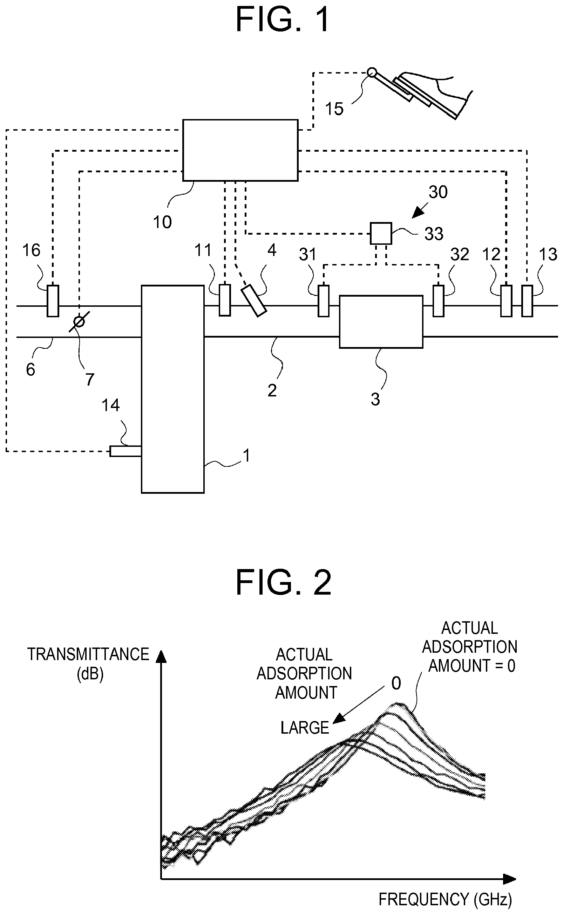

FIG. 1 is a diagram showing a schematic configuration of an internal combustion engine 1, an intake system and an exhaust system according to the embodiment. The internal combustion engine 1 is a diesel engine for vehicle drive. The internal combustion engine 1 may be a gasoline engine. An exhaust passage 2 is connected to the internal combustion engine 1. The exhaust passage 2 is provided with a selective reduction type NOx catalyst 3 (hereinafter, referred to as a "NOx catalyst 3") that reduces NOx in exhaust gas via selective catalytic reduction using ammonia as a reductant.

Upstream of the NOx catalyst 3, the exhaust passage 2 is provided with an addition valve 4 that injects urea water into the exhaust gas. The urea water is a precursor of ammonia (NH₃). The urea water injected from the addition valve 4 is hydrolyzed to ammonia, by heat of the exhaust gas or heat from the NOx catalyst 3, and adsorbed in the NOx catalyst 3. The adsorbed ammonia is used as a reductant in the NOx catalyst 3. The addition valve 4 may be an addition valve that injects ammonia instead of urea water. In the embodiment, the addition valve 4 corresponds to an example of "ammonia supply apparatus" in the invention.

Furthermore, upstream of the addition valve 4, there is provided an upstream-side NOx sensor 11 that detects NOx in the exhaust gas flowing into the NOx catalyst 3. Further, downstream of the NOx catalyst 3, there are provided a downstream-side NOx sensor 12 that detects NOx in the exhaust gas flowing out of the NOx catalyst 3 and a temperature sensor 13 that detects the temperature of the exhaust gas. The temperature sensor 13 may be attached to the NOx catalyst 3, such that the temperature of the NOx catalyst 3 is detected. In the embodiment, the temperature sensor 13 corresponds to an example of "temperature sensor" in the invention.

Further, the exhaust passage 2 is provided with an adsorption amount detection apparatus 30 that detects the amount of ammonia adsorbed in the NOx catalyst 3. The adsorption amount detection apparatus 30 includes a first probe 31 disposed in the exhaust passage 2 on the upstream side of the NOx catalyst 3, a second probe 32 disposed in the exhaust passage 2 on the downstream side of the NOx catalyst 3, and a frequency control apparatus 33. Each of the first probe 31 and the second probe 32 is a rod antenna, and is connected to the frequency control apparatus 33. The frequency control apparatus 33 can generate a microwave between the first probe 31 and the second probe 32, and further, can obtain a resonance frequency by changing the frequency of the microwave. In the embodiment, the adsorption amount detection apparatus 30 includes two rod antennas. However, instead of the two rod antennas, the adsorption amount detection apparatus 30 may include one rod antenna that serves as a sending antenna and serves as a receiving antenna. In the embodiment, the adsorption amount detection apparatus 30 corresponds to an example of "adsorption amount detector" in the invention.

Further, an intake passage 6 is connected to the internal combustion engine 1. In the middle of the intake passage 6, a throttle 7 for adjusting the intake air amount of the internal combustion engine 1 is provided. Further, upstream of the throttle 7, an air flow meter 16 to detect the intake air amount of the internal combustion engine 1 is attached to the intake passage 6.

The internal combustion engine 1 is provided with an electronic control unit (ECU) 10. The ECU 10 controls an operating state of the internal combustion engine 1, an exhaust gas control apparatus and the like. In addition to the above-described temperature sensor 13 and air flow meter 16, a crank position sensor 14 and an accelerator operation amount sensor 15 are electrically connected to the ECU 10, and output values of the sensors are transferred to the ECU 10.

The ECU 10 can obtain the operating state of the internal combustion engine 1, as exemplified by an engine rotation speed based on detection of the crank position sensor 14 and an engine load based on detection of the accelerator operation amount sensor 15. In the embodiment, NOx in the exhaust gas flowing into the NOx catalyst 3 can be detected by the upstream-side NOx sensor 11, but can be also estimated based on the operating state of the internal combustion engine 1, because NOx contained in the exhaust gas (the exhaust gas before the reduction in the NOx catalyst 3, that is, the exhaust gas flowing into the NOx catalyst 3) discharged from the internal combustion engine 1 has relevance with the operating state of the internal combustion engine 1. Further, the ECU 10 can estimate the temperature of the NOx catalyst 3, based on the exhaust gas temperature detected by the temperature sensor 13. The temperature sensor 13 may be a sensor that detects the temperature of the NOx catalyst 3. Further, the temperature of the NOx catalyst 3 can be estimated based on the operating state of the internal combustion engine 1. Meanwhile, the addition valve 4, the throttle 7 and the frequency control apparatus 33 are connected to the ECU 10 through electric wires, and these devices are controlled by the ECU 10.

The adsorption amount detection apparatus 30 detects the amount (actual adsorption amount) of ammonia actually adsorbed in the NOx catalyst 3. Here, the resonance frequency to be detected when the frequency control apparatus 33 generates the microwave and further changes the frequency of the microwave has a correlation with the actual adsorption amount. FIG. 2 is a diagram showing a relation between the frequency of the microwave to be transmitted by the adsorption amount detection apparatus 30 and the transmittance of the microwave. Each of a plurality of lines shown in FIG. 2 corresponds to each of cases of different actual adsorption amounts, respectively. For each line, the resonance frequency is a frequency at which the transmittance is highest. The line indicated by "ACTUAL ADSORPTION AMOUNT = 0" shows a relation when the actual adsorption amount in the NOx catalyst 3 is zero, and the resonance frequency is highest when the actual adsorption amount is zero. Further, the resonance frequency becomes lower as the actual adsorption amount becomes larger. Here, ammonia has a permanent dipole, and the orientation of the permanent dipole is changed depending on an electric field. The permanent dipole of ammonia adsorbed in the NOx catalyst 3 follows the change in the electric field of the microwave in a delayed fashion. Therefore, due to influence of the increase in the actual adsorption amount on an electromagnetic field, the resonance frequency shifts to a side on which the frequency is lower.

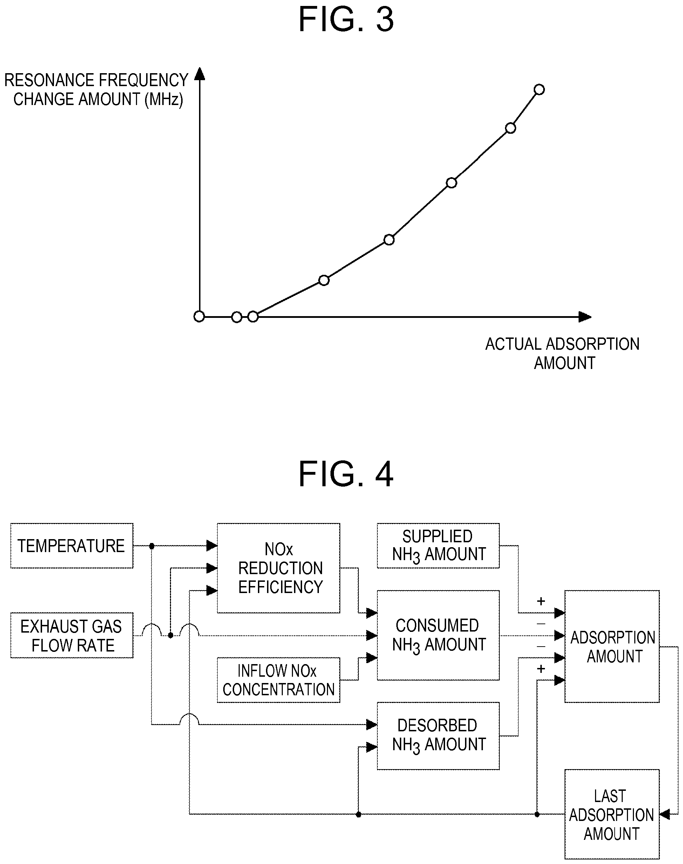

FIG. 3 is a diagram showing a relation between the actual adsorption amount and the change amount of the resonance frequency. The change amount of the resonance frequency is a change amount relative to a reference value that is a resonance frequency when the actual adsorption amount is zero. When the actual adsorption amount is around zero, the change amount of the resonance frequency is zero. However, when the actual adsorption amount increases by some extent, the change amount of the resonance frequency becomes larger as the actual adsorption amount becomes larger. Accordingly, in the range in which the change amount of the resonance frequency becomes larger as the actual adsorption amount becomes larger, it can be said that there is a correlation between the actual adsorption amount and the resonance frequency. The range of the actual adsorption amount in which the change amount of the resonance frequency is zero can be decreased by adjusting the position or shape of the NOx catalyst 3. Accordingly, the NOx catalyst 3 may be formed such that the range in which the change amount of the resonance frequency is zero is decreased. The relation between the actual adsorption amount and the resonance frequency is previously evaluated by an experiment, a simulation or the like, and thereby, the actual adsorption amount can be evaluated from the resonance frequency. In this way, the adsorption amount detection apparatus 30 detects the actual adsorption amount based on the resonance frequency. As shown in FIG. 3, by evaluating the actual adsorption amount based on the change amount of the resonance frequency, it is possible to reduce influence of the change in the resonance frequency due to an individual difference in the NOx catalyst 3. However, by previously evaluating the relation between the resonance frequency and the actual adsorption amount, it is possible to evaluate the actual adsorption amount based on the resonance frequency. Accordingly, in the embodiment, the actual adsorption amount is evaluated based on the resonance frequency.

The ECU 10 diagnoses an abnormality of the NOx catalyst 3 and an abnormality of the addition valve 4, by comparing the actual adsorption amount detected by the adsorption amount detection apparatus 30 and an estimated adsorption amount estimated by the ECU 10. Therefore, the ECU 10 calculates the estimated adsorption amount of the NOx catalyst 3. In the embodiment, by calculating the estimated adsorption amount, the ECU 10 functions as an example of "electronic control unit" in the invention. For example, in the case where the actual adsorption amount of the NOx catalyst 3 is relatively small, almost all of ammonia to be supplied from the addition valve 4 is adsorbed in the NOx catalyst 3. Accordingly, the amount of ammonia to be supplied from the addition valve 4 can be regarded as the estimated adsorption amount. There is a correlation between the amount of urea water to be injected from the addition valve 4 and the amount of ammonia to be supplied to the NOx catalyst 3. Therefore, by previously evaluating the correlation, it is possible to calculate the amount of ammonia to be supplied to the NOx catalyst 3 from the amount of urea water to be injected from the addition valve 4. Further, the amount of urea water to be injected from the addition valve 4 has a correlation with the valve opening time of the addition valve 4, and the valve opening time of the addition valve 4 is controlled by the ECU 10. Accordingly, the ECU 10 can calculate the amount of urea water to be injected from the addition valve 4 and the amount of ammonia to be supplied to the NOx catalyst 3 based on the valve opening time of the addition valve 4.

When the actual adsorption amount is relatively large, NOx is reduced by ammonia adsorbed in the NOx catalyst 3, and ammonia adsorbed in the NOx catalyst 3 is consumed. Therefore, the correlation between the amount of ammonia to be supplied from the addition valve 4 and the actual adsorption amount changes. Hence, a later-described abnormality diagnosis is executed in a range in which there is a correlation between the amount of ammonia to be supplied from the addition valve 4 and the actual adsorption amount. Even when the correlation between the amount of ammonia to be supplied from the addition valve 4 and the actual adsorption amount changes, the estimated adsorption amount can be calculated as described below.

FIG. 4 is a block diagram for evaluating the estimated adsorption amount in the NOx catalyst 3. In the embodiment, the estimated adsorption amount is evaluated by integrating the change amount of the ammonia adsorption amount in the NOx catalyst 3 with an operation period. The change amount of the ammonia adsorption amount in the NOx catalyst 3 can be evaluated by subtracting a decrease amount of the ammonia adsorption amount from an increase amount of the ammonia adsorption amount. The increase amount of the ammonia adsorption amount in the NOx catalyst 3 is the amount ("SUPPLIED NH₃ AMOUNT" in FIG. 4) of ammonia to be supplied from the addition valve 4 to the NOx catalyst 3. The decrease amount of the ammonia adsorption amount in the NOx catalyst 3 is the amount ("CONSUMED NH₃ AMOUNT" in FIG. 4) of ammonia to be consumed in the NOx catalyst 3 and the amount ("DESORBED NH₃ AMOUNT" in FIG. 4) of ammonia to be desorbed from the NOx catalyst 3. The ammonia adsorption amount ("ADSORPTION AMOUNT" in FIG. 4) at the current time is calculated by integrating the change amount of the ammonia adsorption amount in the NOx catalyst 3.

The amount ("SUPPLIED NH₃ AMOUNT" in FIG. 4) of ammonia to be supplied from the addition valve 4 to the NOx catalyst 3 is calculated based on the valve opening time of the addition valve 4, as described above. The amount ("CONSUMED NH₃ AMOUNT" in FIG. 4) of ammonia to be consumed in the NOx catalyst 3 is related to the NOx reduction efficiency ("NOx REDUCTION EFFICIENCY" in FIG. 4) in the NOx catalyst 3, the flow rate ("EXHAUST GAS FLOW RATE" in FIG. 4) of the exhaust gas of the internal combustion engine 1, and the concentration ("INFLOW NOx CONCENTRATION" in FIG. 4) of NOx in the exhaust gas flowing into the NOx catalyst 3, and therefore, can be calculated based on values of them. The exhaust gas flow rate may be calculated based on intake air amount and fuel injection amount, or may be detected by a sensor.

The NOx reduction efficiency is the ratio of the amount of NOx to be reduced in the NOx catalyst 3 to the amount of NOx in the exhaust gas flowing into the NOx catalyst 3. The NOx reduction efficiency is related to the temperature ("TEMPERATURE" in FIG. 4) of the NOx catalyst 3, the exhaust gas flow rate, and the ammonia adsorption amount ("LAST ADSORPTION AMOUNT" in FIG. 4) in the NOx catalyst 3, and therefore, can be calculated based on values of them. As the ammonia adsorption amount in the NOx catalyst 3, a value calculated in the last operation period is used. The relation of the NOx reduction efficiency in the NOx catalyst 3, the temperature of the NOx catalyst 3, the exhaust gas flow rate and the ammonia adsorption amount in the NOx catalyst 3 is previously evaluated by an experiment, a simulation or the like, and thereby, the NOx reduction efficiency can be calculated. A map indicating the relation may be previously created.

The amount ("DESORBED NH₃ AMOUNT" in FIG. 4) of ammonia to be desorbed from the NOx catalyst 3 is related to the temperature ("TEMPERATURE" in FIG. 4) of the NOx catalyst 3 and the ammonia adsorption amount ("LAST ADSORPTION AMOUNT" in FIG. 4) in the NOx catalyst 3, and can be calculated based on values of them. In this case, as the temperature of the NOx catalyst 3 becomes higher, the amount of ammonia able to be adsorbed by the NOx catalyst 3 decreases. Therefore, the amount ("DESORBED NH₃ AMOUNT" in FIG. 4) of ammonia to be desorbed from the NOx catalyst 3 becomes larger. Further, as the last adsorption amount becomes larger, the desorbed NH₃ amount becomes larger. Based on this relation, the amount of ammonia to be desorbed from NOx catalyst 3 can be calculated from the temperature of the NOx catalyst 3 and the ammonia adsorption amount in the NOx catalyst 3. The relation of the temperature of the NOx catalyst 3, the ammonia adsorption amount and the desorbed NH₃ amount is previously evaluated by an experiment, a simulation or the like, and thereby, the desorbed NH₃ amount can be calculated based on the temperature of the NOx catalyst 3 and the ammonia adsorption amount. A map indicating the relation may be previously created. Thus, it is possible to calculate the change amount of the ammonia adsorption amount in the NOx catalyst 3. By integrating this value, the ammonia adsorption amount (estimated adsorption amount) at the current time can be calculated.

The ECU 10 diagnoses the abnormality of the NOx catalyst 3 and the abnormality of the addition valve 4 based on comparison between the estimated adsorption amount and the actual adsorption amount. The abnormality of the NOx catalyst 3 herein means that the maximum amount of ammonia able to be adsorbed by the NOx catalyst 3 falls below an acceptable value. The abnormality of the addition valve 4 means that the amount of ammonia to be supplied from the addition valve 4 per unit time falls below an acceptable value. The abnormality of the NOx catalyst 3 occurs due to deterioration in the NOx catalyst 3, and the abnormality of the addition valve 4 occurs due to clogging or the like of the addition valve 4.

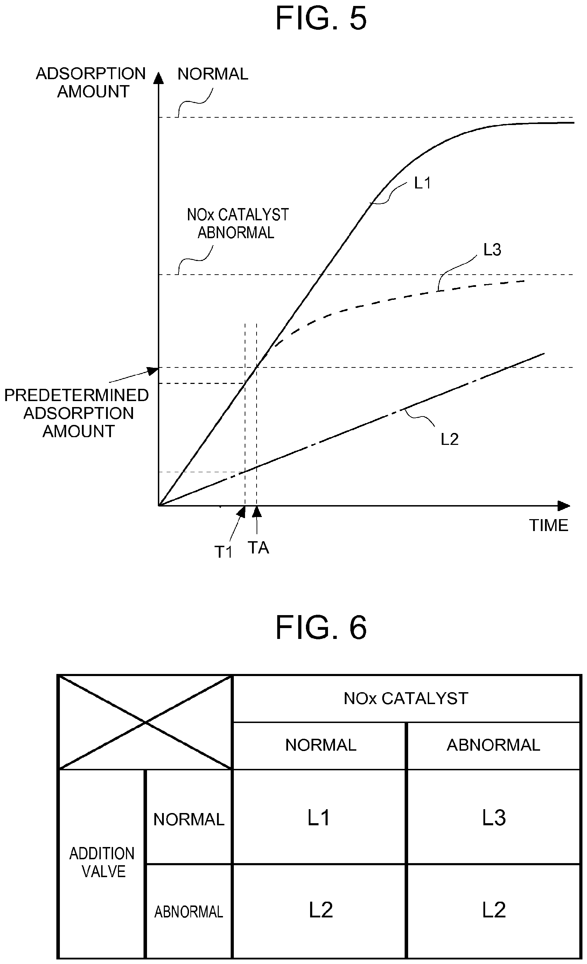

FIG. 5 is a time chart showing a transition of the ammonia adsorption amount in the NOx catalyst 3. A line L1 indicates the estimated adsorption amount. In the embodiment, it can be said that the line L1 indicates the actual adsorption amount in the case where the NOx catalyst 3 is normal. A line L2 indicates an actual adsorption amount in a case where at least the addition valve 4 is abnormal. However, whether the NOx catalyst 3 is normal cannot be determined by only referring to the line L2. A line L3 indicates an actual adsorption amount in a case where the NOx catalyst 3 is abnormal and where the addition valve 4 is normal. Hereinafter, the case where the NOx catalyst 3 is abnormal and where the addition valve 4 is normal is also referred to as a case where only the NOx catalyst 3 is abnormal, and a case where the NOx catalyst 3 is normal and where the addition valve 4 is abnormal is also referred to as a case where only the addition valve 4 is abnormal. FIG. 5 shows a case where ammonia is supplied to the NOx catalyst 3 in a state where the estimated adsorption amount and the actual adsorption amount are zero. Accordingly, it can be said that the ordinate axis in FIG. 5 indicates the change amount of the actual adsorption amount and the change amount of the estimated adsorption amount relative to the state where the actual adsorption amount and the estimated adsorption amount are zero. In FIG. 5, "NORMAL" indicates a convergence value of the estimated adsorption amount, and the convergence value is the maximum amount of ammonia able to be adsorbed by the normal NOx catalyst 3. Further, in FIG. 5, "NOx CATALYST ABNORMAL" indicates a convergence value of the actual adsorption amount in the case where the NOx catalyst 3 is abnormal. Further, FIG. 6 is a diagram for arranging relations of the line L1, the line L2 and the line L3 corresponding to cases in which the NOx catalyst 3 and the addition valve 4 are normal or abnormal. In the case where the NOx catalyst 3 is abnormal, the maximum amount of ammonia able to be adsorbed decreases, thus it becomes hard for ammonia to be adsorbed in the NOx catalyst 3. However, in the case where the actual adsorption amount is a small amount (in the case where the actual adsorption amount is equal to or smaller than a predetermined adsorption amount in FIG. 5), almost all of ammonia supplied to the NOx catalyst 3 is adsorbed in the NOx catalyst 3 even when the NOx catalyst 3 is abnormal. Therefore, there is hardly difference in the actual adsorption amount between the case where the NOx catalyst 3 is normal and the case where the NOx catalyst 3 is abnormal. That is, in the case where only the NOx catalyst 3 is abnormal, there is hardly difference between the estimated adsorption amount (the line L1) and the actual adsorption amount (the line L3), until time TA. Here, the predetermined adsorption amount is an upper limit of the estimated adsorption amount or the actual adsorption amount that allows the difference between the estimated adsorption amount and the actual adsorption amount not to be generated or allows the difference to be in a predetermined range, in the case where only the NOx catalyst 3 is abnormal. The time TA indicates a time at which the difference between the estimated adsorption amount and the actual adsorption amount starts to be generated or a time at which the difference between the estimated adsorption amount and the actual adsorption amount exceeds the predetermined range. The predetermined range here refers to, for example, an error range which is set in advance.

On the other hand, in the case where at least the addition valve 4 is abnormal, there is a difference between the estimated adsorption amount (the line L1) and the actual adsorption amount (the line L2) even when the estimated adsorption amount is equal to or smaller than the predetermined adsorption amount in FIG. 5. That is, in the case where the addition valve 4 is abnormal, the supply amount of ammonia from the addition valve 4 decreases, and by an amount of the decrease, the amount of ammonia to be adsorbed in the NOx catalyst 3 also decreases. Therefore, the actual adsorption amount is smaller than the estimated adsorption amount. Thus, in a period before time TA, the actual adsorption amount is different between the case where only the NOx catalyst 3 is abnormal and the case where at least the addition valve 4 is abnormal.

Hence, in the case where the estimated adsorption amount is equal to or smaller than the predetermined adsorption amount, the ECU 10 compares the estimated adsorption amount and the actual adsorption amount. The ECU 10 diagnoses at least the addition valve 4 as being abnormal when the difference is equal to or larger than a first threshold. The first threshold corresponds to an example of "threshold" in the invention. The ECU 10 executes the abnormality diagnosis for the addition valve 4, by comparing the estimated adsorption amount and the actual adsorption amount at time T1, which is an example of a time point before time TA shown in FIG. 5. Time T1 is previously set to a time point at which the estimated adsorption amount and the actual adsorption amount are evaluated. In the embodiment, the estimated adsorption amount at time TA corresponds to an example of "predetermined adsorption amount" in the invention. Further, as shown in FIG. 3, in the case where the actual adsorption amount is too small, it is sometimes difficult to evaluate the actual adsorption amount based on the correlation between the resonance frequency and the actual adsorption amount. In such a case, time T1 may be set to a time point at which the resonance frequency changes in response to the increase in the actual adsorption amount. Since there is some correlation between time and the estimated adsorption amount, and therefore, the time point of the execution of the abnormality diagnosis may be determined based on time, or may be determined based on the estimated adsorption amount. In the case where the time point of the execution of the abnormality diagnosis is determined based on the estimated adsorption amount, the abnormality diagnosis for the addition valve 4 is executed when the estimated adsorption amount is the ammonia adsorption amount indicated on the line L1 corresponding to time T1.

Next, a case where at least the addition valve 4 is diagnosed as being abnormal at time T1 will be discussed. This case can be a case where only the addition valve 4 is abnormal or a case where both the addition valve 4 and the NOx catalyst 3 are abnormal. Hence, the ECU 10 further diagnoses whether the NOx catalyst 3 is abnormal. In the case where at least the addition valve 4 is diagnosed as being abnormal at time T1, the ECU 10 increases a command value of the supply amount of ammonia from the addition valve 4, so as to compensate the decrease in the supply amount of ammonia due to the abnormality of the addition valve 4. Thereby, the valve opening time of the addition valve 4 is increased, and therefore, the actual supply amount of ammonia gets close to the required supply amount of ammonia.

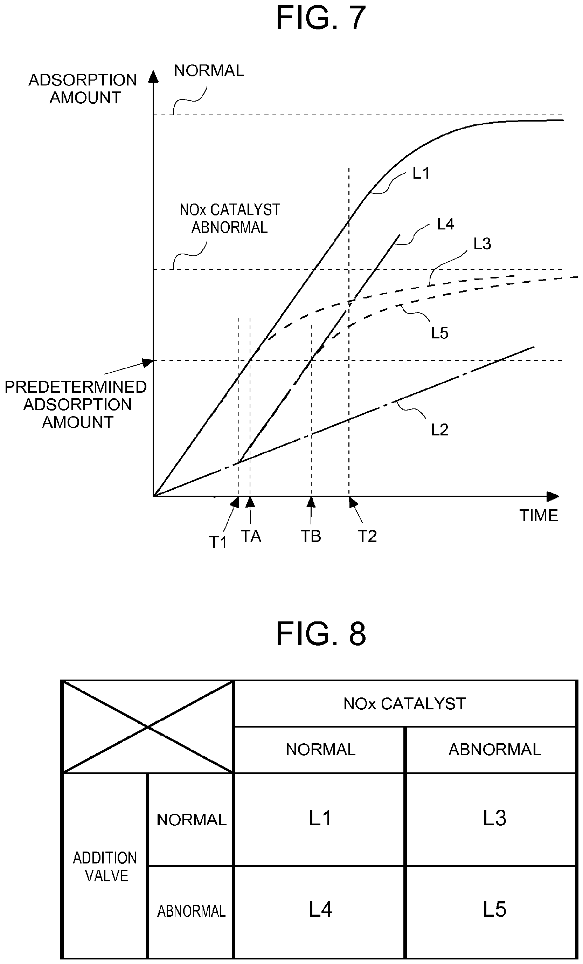

FIG. 7 is a time chart showing a transition of the estimated adsorption amount and the actual adsorption amount when the supply amount of ammonia from the addition valve 4 is increased at time T1. A line L1, a line L2 and a line L3 in FIG. 7 are the same as those in FIG. 5. A line L4 indicates the estimated adsorption amount after the supply amount of ammonia from the addition valve 4 is increased, and indicates the actual adsorption amount in the case where the NOx catalyst 3 is normal, that is, the actual adsorption amount in the case where only the addition valve 4 is abnormal. A line L5 indicates the actual adsorption amount in the case where the NOx catalyst 3 and the addition valve 4 are abnormal. FIG. 8 is a diagram for arranging relations of the line L1, the line L3, the line L4 and the line L5 corresponding to cases in which the NOx catalyst 3 and the addition valve 4 are normal or abnormal. In the case where only the addition valve 4 is abnormal, the increase in the supply amount of ammonia reduces the influence of the abnormality of the addition valve 4 on the actual adsorption amount. Thus, the slope of the line L4 gets close to the slope of the line L1. The estimated adsorption amount after time T1 is calculated using the actual adsorption amount at time T1 as the starting point. That is, the actual adsorption amount at time T1 is set as a new estimated adsorption amount at time T1, and the estimated adsorption amount after time T1 is calculated.

In the case where the NOx catalyst 3 and the addition valve 4 are abnormal, the difference between the estimated adsorption amount and the actual adsorption amount is generated when the actual adsorption amount becomes larger than the predetermined adsorption amount. In FIG. 7, at time TB, the estimated adsorption amount and the actual adsorption amount reaches the predetermined adsorption amount, and the difference between the estimated adsorption amount and the actual adsorption amount starts to be enlarged. The abnormality diagnosis for the NOx catalyst 3 can be executed by comparing the estimated adsorption amount and the actual adsorption amount at the time when the difference between the estimated adsorption amount and the actual adsorption amount becomes sufficiently large in the case where the NOx catalyst 3 and the addition valve 4 are abnormal. The time when the difference between the estimated adsorption amount and the actual adsorption amount becomes sufficiently large in the case where the NOx catalyst 3 and the addition valve 4 are abnormal is denoted by T2 in FIG. 7. That is, in the case where the difference between the estimated adsorption amount and the actual adsorption amount is equal to or larger than the first threshold at time T1 and where the difference between the estimated adsorption amount and the actual adsorption amount is equal to or larger than a second threshold at time T2, the ECU 10 diagnoses the NOx catalyst 3 and the addition valve 4 as being abnormal. Further, in the case where the difference between the estimated adsorption amount and the actual adsorption amount is equal to or larger than the first threshold at time T1 and where the difference between the estimated adsorption amount and the actual adsorption amount is smaller than the second threshold at time T2, the ECU 10 diagnoses only the addition valve 4 as being abnormal.

Next, a case where only the NOx catalyst 3 is abnormal will be discussed. In this case, the difference between the estimated adsorption amount and the actual adsorption amount starts to be enlarged at time TA. The abnormality diagnosis for the NOx catalyst 3 can be executed by comparing the estimated adsorption amount and the actual adsorption amount at the time when the difference between the estimated adsorption amount and the actual adsorption amount becomes sufficiently large in the case where only the NOx catalyst 3 is abnormal. In the embodiment, the ECU 10 compares the estimated adsorption amount and the actual adsorption amount at the above-described time T2, and when this difference is equal to or larger than the second threshold, the ECU 10 diagnoses only the NOx catalyst 3 as being abnormal. That is, in the case where the difference between the estimated adsorption amount and the actual adsorption amount is smaller than the first threshold at time T1 and where the difference between the estimated adsorption amount and the actual adsorption amount is equal to or larger than the second threshold at time T2, the ECU 10 diagnoses only the NOx catalyst 3 as being abnormal. In the case where the difference between the estimated adsorption amount and the actual adsorption amount is smaller than the first threshold at time T1 and where the difference between the estimated adsorption amount and the actual adsorption amount is smaller than the second threshold at time T2, the ECU 10 diagnoses the NOx catalyst 3 and the addition valve 4 as being normal. The abnormality diagnosis for the NOx catalyst 3 may be executed at a time after time TA and other than time T2.

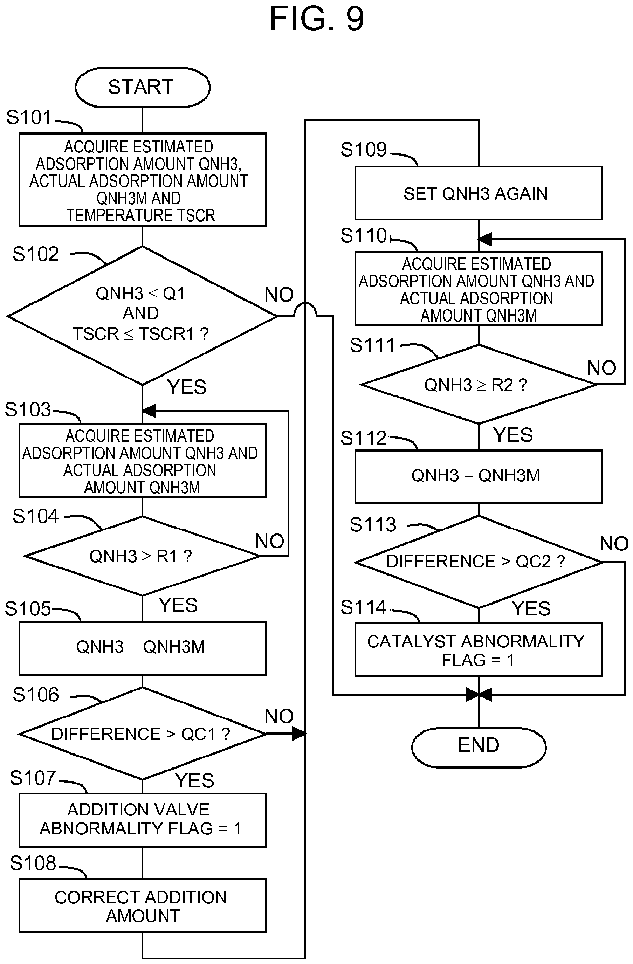

Next, a flow of the abnormality diagnosis according to the embodiment will be described. FIG. 9 is a flowchart showing a flow of an abnormality diagnosis control according to the embodiment. The flowchart is executed at a predetermined interval, by the ECU 10. In step S101, an estimated adsorption amount QNH3, an actual adsorption amount QNH3M and a temperature TSCR of the NOx catalyst 3 are acquired. The estimated adsorption amount QNH3 is calculated with a predetermined operation period, by the ECU 10, and therefore, this value is acquired. As the actual adsorption amount QNH3M, the detection value of the adsorption amount detection apparatus 30 is used. As the temperature TSCR of the NOx catalyst 3, the detection value of the temperature sensor 13 is used.

In step S102, it is determined whether the estimated adsorption amount QNH3 is equal to or smaller than a predetermined adsorption amount Q1 and the temperature TSCR of the NOx catalyst 3 is equal to or smaller than a diagnosable temperature TSCR1. In step S102, it is determined whether a condition for executing the abnormality diagnosis for the addition valve 4 has been satisfied. The predetermined adsorption amount Q1 is the estimated adsorption amount corresponding to time TA in FIG. 5. In the case where the NOx catalyst 3 is abnormal, the difference between the estimated adsorption amount and the actual adsorption amount becomes large when the actual adsorption amount becomes larger than the predetermined adsorption amount Q1. Therefore, it becomes difficult to discriminate between the abnormality of the addition valve 4 and the abnormality of the NOx catalyst 3. Accordingly, the abnormality diagnosis for the addition valve 4 is performed only when the estimated adsorption amount QNH3 is equal to or smaller than the predetermined adsorption amount Q1. The diagnosable temperature TSCR1 is a temperature at which the desorption of ammonia from the NOx catalyst 3 is restrained or a temperature at which the desorption of ammonia from the NOx catalyst 3 is in an acceptable range. The diagnosable temperature TSCR1 in the embodiment corresponds to an example of "predetermined temperature" in the invention. When the temperature of the NOx catalyst 3 becomes high, ammonia is desorbed from the NOx catalyst 3. Since it is necessary to execute the abnormality determination in a state where the estimated adsorption amount and the actual adsorption amount are small, influence of an error increases. As a result, there is a concern of decrease in the accuracy of the abnormality diagnosis if the diagnosis is executed when the temperature of the NOx catalyst 3 becomes high. Therefore, the diagnosable temperature TSCR1 is set to a temperature that allows a required diagnosis accuracy to be secured. The ECU 10 executes the abnormality diagnosis only when the temperature TSCR of the NOx catalyst 3 is equal to or lower than the diagnosable temperature TSCR1. In the case where the positive determination is made in step S102, the abnormality diagnosis control proceeds to step S103. In the case where the negative determination is made, the abnormality diagnosis control ends.

In step S103, the estimated adsorption amount QNH3 and the actual adsorption amount QNH3M are acquired, and in step S104, it is determined whether the estimated adsorption amount QNH3 is equal to or larger than a first predetermined adsorption amount R1. The first predetermined adsorption amount R1 is the estimated adsorption amount corresponding to time T1 in FIG. 5 and FIG. 7. In step S104, it is determined whether the current time is a time at which a sufficient difference is generated between the estimated adsorption amount and the actual adsorption amount in the case where the addition valve 4 is abnormal. Time T1 in FIG. 5 and FIG. 7 may be previously evaluated by an experiment, a simulation or the like, such that whether the current time is a time after time T1 can be determined in step S104. In the case where the positive determination is made in step S104, the abnormality diagnosis control proceeds to step S105, and in the case where the negative determination is made, step S103 is executed again.

In step S105, the difference (QNH3 - QNH3M) between the estimated adsorption amount QNH3 and the actual adsorption amount QNH3M is calculated. In step S106, it is determined whether the difference calculated in step S105 is larger than a first threshold QC1. In step S106, it is determined whether the addition valve 4 is abnormal. The first threshold QC1 is previously evaluated by an experiment, a simulation or the like, as the difference between the estimated adsorption amount QNH3 and the actual adsorption amount QNH3M when the addition valve 4 is normal. The first threshold QC1 is changed depending on the temperature of the NOx catalyst 3. In the case where the positive determination is made in step S106, the abnormality diagnosis control proceeds to step S107. In step S107, at least the addition valve 4 is diagnosed as being abnormal, and an addition valve abnormality flag is set to 1. The addition valve abnormality flag is a flag that is set to 1 in the case where the addition valve 4 is abnormal and that is set to 0 in the case where the addition valve 4 is normal. The initial value of the addition valve abnormality flag is 0.

In step S108, the supply amount of ammonia from the addition valve 4 is corrected. At this time, the supply amount of ammonia from the addition valve 4 is smaller than the required supply amount of ammonia. Therefore, the supply amount is increased based on the ratio between the estimated adsorption amount and the actual adsorption amount. Hence, lack of the supply amount is compensated. On this occasion, a correction coefficient for the supply amount of ammonia is evaluated by dividing the estimated adsorption amount QNH3 by the actual adsorption amount QNH3M. The amount of urea to be injected from the addition valve 4 is corrected based on the correction coefficient. Thus, the supply amount of ammonia is increased such that the increase rate is the ratio between the estimated adsorption amount and the actual adsorption amount. The ECU 10 that processes step S108 functions as an example of "electronic control unit" in the invention.

In the case where the negative determination is made in step S106 or in the case where the process of step S108 is completed, the abnormality diagnosis control proceeds to step S109. In step S109, the estimated adsorption amount QNH3 is set again. The estimated adsorption amount QNH3 is separately calculated by the ECU 10. In the case where there is a gap between the estimated adsorption amount QNH3 and the actual adsorption amount QNH3M, the gap is solved. That is, the actual adsorption amount QNH3M acquired in step S103 is adopted as the estimated adsorption amount at the current time, in the subsequent calculation of the estimated adsorption amount.

In step S110, the estimated adsorption amount QNH3 and the actual adsorption amount QNH3M are acquired. In step S111, it is determined whether the estimated adsorption amount QNH3 is equal to or larger than a second predetermined adsorption amount R2. The second predetermined adsorption amount R2 is the estimated adsorption amount corresponding to time T2 in FIG. 7. In step S111, it is determined whether the current time is a time at which a sufficient difference is generated between the estimated adsorption amount and the actual adsorption amount in the case where the NOx catalyst 3 is abnormal. Time T2 in FIG. 7 may be previously evaluated by an experiment, a simulation or the like, and whether the current time is a time after time T2 may be determined in step S111. In the case where the positive determination is made in step S111, the abnormality diagnosis control proceeds to step S112, and in the case where the negative determination is made, step S110 is executed again.

In step S112, the difference (QNH3 - QNH3M) between the estimated adsorption amount QNH3 and the actual adsorption amount QNH3M is calculated. In step S113, it is determined whether the difference calculated in step S112 is larger than a second threshold QC2. In step S113, it is determined whether the NOx catalyst 3 is abnormal. The second threshold QC2 is previously evaluated by an experiment, a simulation or the like, as the difference between the estimated adsorption amount QNH3 and the actual adsorption amount QNH3M when the NOx catalyst 3 is normal. The second threshold QC2 changes depending on the temperature of the NOx catalyst 3. In the case where the positive determination is made in step S113, the abnormality diagnosis control proceeds to step S114. In the case where the negative determination is made, the abnormality diagnosis control ends. In step S114, the NOx catalyst 3 is diagnosed as being abnormal, and a catalyst abnormality flag is set to 1. The catalyst abnormality flag is a flag that is set to 1 in the case where the NOx catalyst 3 is abnormal and that is set to 0 in the case where the NOx catalyst 3 is normal. The initial value of the catalyst abnormality flag is 0. In the embodiment, the ECU 10 that processes step S107 or step S114 functions as an example of "electronic control unit" in the invention.

As described above, with the embodiment, first, the abnormality diagnosis for the addition valve 4 is executed, and thereby, it is possible to execute the abnormality diagnosis for the addition valve 4 regardless of whether the NOx catalyst 3 is abnormal. Next, the abnormality diagnosis for the NOx catalyst 3 is executed, and thereby, it is possible to execute the diagnosis while discriminating between the abnormality for the addition valve 4 and the abnormality for the NOx catalyst 3. Further, it is not necessary to supply ammonia until ammonia flows out of the NOx catalyst 3, and thereby, it is possible to restrain ammonia from flowing out of the NOx catalyst 3 in the execution of the abnormality diagnosis.

The second predetermined adsorption amount R2 in step Sill may be set depending on the addition valve abnormality flag. As shown in FIG. 7, in the case where the NOx catalyst 3 and the addition valve 4 are abnormal, the difference between the estimated adsorption amount and the actual adsorption amount is generated at time TB. However, in the case where only the NOx catalyst 3 is abnormal, the difference between the estimated adsorption amount and the actual adsorption amount is generated at time TA. Accordingly, in the case where only the NOx catalyst 3 is abnormal, the abnormality diagnosis for the NOx catalyst 3 is possible even before time TB because a sufficient difference between the estimated adsorption amount and the actual adsorption amount is generated. Therefore, the second predetermined adsorption amount R2 may be set to a value that differs depending on whether the addition valve 4 is abnormal. In this case, the second threshold QC2 may be set to a value that differs depending on whether the addition valve 4 is abnormal.

Further, the abnormality diagnosis may be executed only in the case where the temperature TSCR of the NOx catalyst 3 rises once to a temperature (ammonia desorption temperature) at which ammonia cannot be adsorbed in the NOx catalyst 3 and thereafter falls to equal to or lower than the diagnosable temperature TSCR1. When the temperature TSCR of the NOx catalyst 3 rises to the ammonia desorption temperature, ammonia is hardly adsorbed in the NOx catalyst 3. Thereafter, when the temperature TSCR of the NOx catalyst 3 falls to equal to or lower than the diagnosable temperature TSCR1, ammonia starts to be adsorbed in a state where ammonia is hardly adsorbed in the NOx catalyst 3. In this case, the estimated adsorption amount becomes zero once. Here, there is a possibility that the estimated adsorption amount contains an error, and the error can increase with elapse of time. Even in the case where the estimated adsorption amount contains such an error, the estimated adsorption amount can be reset to zero when the NOx catalyst 3 becomes a high-temperature state so that ammonia is desorbed. Accordingly, the accuracy of the subsequent estimation of the estimated adsorption amount increases, thus the accuracy of the abnormality diagnosis also increases by executing the abnormality diagnosis using the estimated adsorption amount.

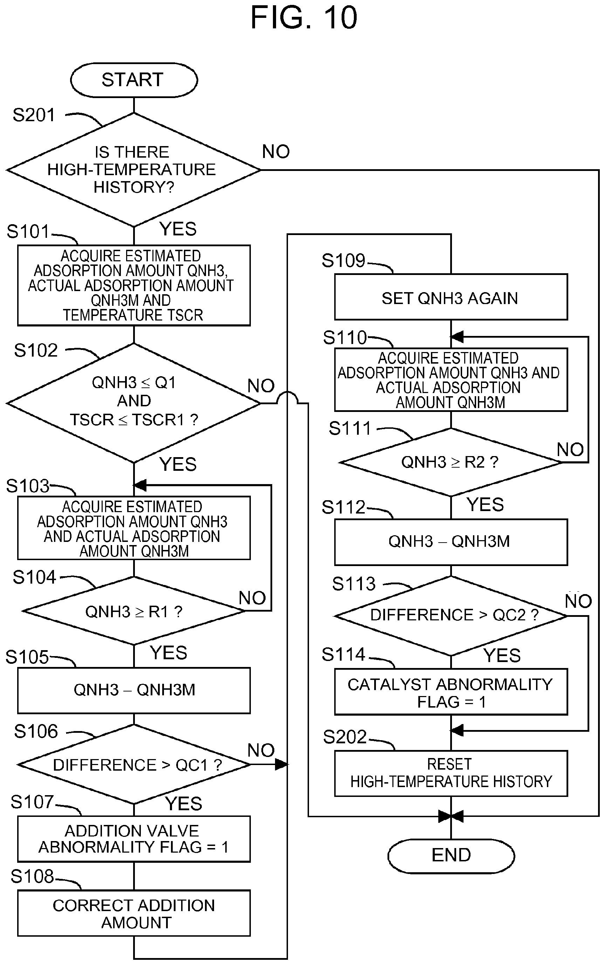

FIG. 10 is a flowchart showing a flow of the abnormality diagnosis control according to the embodiment. The flowchart is executed at a predetermined interval, by the ECU 10. For steps for executing the same processes as those in the flowchart shown in FIG. 9, the same reference characters are assigned, and descriptions therefor are omitted.

In the flowchart shown in FIG. 10, first, in step S201, it is determined whether there is a high-temperature history indicating that the temperature of the NOx catalyst 3 rose to the ammonia desorption temperature. The NOx catalyst 3 becomes a high-temperature state, for example, when particulate matter (PM) is removed from a filter that collects PM in the exhaust gas. In this case, an oxidation catalyst is provided in the exhaust passage on the upstream side of the filter, heat is generated by supplying fuel to the oxidation catalyst, and by this heat, the temperature of the filter rises. Since the temperature of the filter rises in this way, PM accumulated in the filter is oxidized and is removed. The process of removing PM from the filter in this way is referred to as a filter regeneration process. When the NOx catalyst 3 is disposed downstream of the filter, by the execution of the filter regeneration process, the exhaust gas having a high temperature flows into the NOx catalyst 3, and therefore, the temperature of the NOx catalyst 3 rises. At the time of the filter regeneration process, the temperature of the NOx catalyst 3 reaches the ammonia desorption temperature, and therefore, ammonia is removed from the NOx catalyst 3.

Further, the exhaust gas having a high temperature flows into the NOx catalyst 3, also in the case of execution of a sulfur poisoning solving process that is a process of solving sulfur poisoning of the storage reduction type NOx catalyst. Further, the exhaust gas having a high temperature flows into the NOx catalyst 3 also at the time of a high-load operation of the internal combustion engine 1. Also in these cases, the temperature of the NOx catalyst 3 reaches the ammonia desorption temperature, and therefore, ammonia is removed from the NOx catalyst 3. In the case where the filter regeneration process, the sulfur poisoning solving process, the high-load operation or the like was performed, it is determined that there is a high-temperature history. In the case where there is a high-temperature history, the estimated adsorption amount and the actual adsorption amount become zero.

In the case where the positive determination is made in step S201, the abnormality diagnosis control proceeds to step S101. In the case where the negative determination is made, the abnormality diagnosis control ends. When the abnormality diagnosis ends, the high-temperature history is reset in step S202. Thereby, in step S201, the negative determination is made until the next filter regeneration process or the like is performed. In this way, it is possible to increase the accuracy of the abnormality diagnosis.

In the case where the existence of the high-temperature history is set as a condition for executing the abnormality diagnosis, there is a concern of waiting for a long time until the condition is satisfied. Therefore, the temperature of the NOx catalyst 3 may be raised, by actively performing the filter regeneration process, the sulfur poisoning solving process or the like before the execution of the abnormality diagnosis. Further, the temperature of the NOx catalyst 3 may be raised to the ammonia desorption temperature merely for the execution of the abnormality diagnosis. As the method for raising the temperature of the NOx catalyst 3 to the ammonia desorption temperature, it is allowed to employ, for example, a method of providing an oxidation catalyst upstream of the NOx catalyst 3 and supplying fuel to the oxidation catalyst, a method of providing a heating element that generates heat by application of electricity on the upstream side of the NOx catalyst 3, or using the heating element as a support for the NOx catalyst 3.

In the abnormality diagnosis control shown in FIG. 9 and FIG. 10, the abnormality diagnosis for the addition valve 4 is executed when the estimated adsorption amount becomes equal to or larger than the first predetermined adsorption amount R1. However, even before the estimated adsorption amount becomes equal to or larger than the first predetermined adsorption amount R1, the addition valve 4 may be diagnosed as being abnormal when the difference between the estimated adsorption amount and the actual adsorption amount becomes equal to or larger than the first threshold QC1. Similarly, even before the estimated adsorption amount becomes equal to or larger than the second predetermined adsorption amount R2, the NOx catalyst 3 may be diagnosed as being abnormal when the difference between the estimated adsorption amount and the actual adsorption amount becomes equal to or larger than the second threshold QC2.

In the above description, the abnormality diagnosis is executed by comparing the difference between the estimated adsorption amount and the actual adsorption amount with the threshold, but the abnormality diagnosis only needs to be executed based on the comparison between the estimated adsorption amount and the actual adsorption amount. Therefore, for example, the abnormality diagnosis may be executed based on the ratio between the estimated adsorption amount and the actual adsorption amount. Further, for example, the abnormality diagnosis may be executed based on the difference between the increase amount of the estimated adsorption amount and the increase amount of the actual adsorption amount in a predetermined period, or the slope of the line L1 or line L2 shown in FIG. 5. The abnormality diagnoses based on these comparisons are the same as the abnormality diagnosis based on the difference between the estimated adsorption amount and the actual adsorption amount, in the end. Further, even when the supply amount of ammonia from the addition valve 4 is not corrected in the case where the addition valve 4 is abnormal, the convergence value of the actual adsorption amount differs between the case in which the NOx catalyst 3 is normal and the case in which the NOx catalyst 3 is abnormal, after elapse of a sufficient time. Accordingly, the NOx catalyst 3 can be diagnosed as being abnormal in the case where the difference between the estimated adsorption amount QNH3 and the actual adsorption amount QNH3M after elapse of a sufficient time is larger than the second threshold QC2. In this case, it is not necessary to correct the supply amount of ammonia from the addition valve 4 in step S108.

## Claims

1. An abnormality diagnosis apparatus for an exhaust gas control apparatus, the exhaust gas control apparatus including a catalyst (3) which is provided in an exhaust passage (2) of an internal combustion engine (1) and reduces NOx via selective catalytic reduction using ammonia, and an ammonia supply apparatus (4) which supplies ammonia to the catalyst (3), the abnormality diagnosis apparatus comprising:
an adsorption amount detector (30) which detects an actual adsorption amount (QNH3M) that is an amount of ammonia actually adsorbed in the catalyst (3); and
an electronic control unit (15) configured to:
estimate an estimated adsorption amount (QNH3) that is an ammonia adsorption amount in the catalyst (3) on an assumption that the ammonia supply apparatus (4) is normal; and
execute an abnormality diagnosis in which the ammonia supply apparatus (4) is diagnosed as being abnormal, in a case where the estimated adsorption amount (QNH3) is equal to or smaller than a predetermined adsorption amount (Q1) and where a difference between the estimated adsorption amount (QNH3) and the actual adsorption amount (QNH3M) is larger than a threshold (QC1).

2. The abnormality diagnosis apparatus according to claim 1, further comprising a temperature sensor (13) configured to acquire a temperature (TSCR) of the catalyst (3), wherein the electronic control unit (15) is configured to execute the abnormality diagnosis, in a case where the estimated adsorption amount (QNH3M) is equal to or smaller than the predetermined adsorption amount (Q1) and where the temperature (TSCR) of the catalyst (3) acquired by the temperature sensor (13) is equal to or lower than a predetermined temperature (TSCR1).

3. The abnormality diagnosis apparatus according to claim 2, wherein the electronic control unit (15) is configured to estimate that the estimated adsorption amount (QNH3) is zero, in a case where the temperature (TSCR) of the catalyst (3) rises to equal to or higher than an ammonia desorption temperature.

4. The abnormality diagnosis apparatus according to any one of claims 1 to 3, wherein the electronic control unit (15) is configured to increase a supply amount of ammonia from the ammonia supply apparatus (4), in a case where the ammonia supply apparatus (4) is diagnosed as being abnormal, compared to a case where the ammonia supply apparatus (4) is diagnosed as being normal.

5. The abnormality diagnosis apparatus according to claim 4, wherein the electronic control unit (15) is configured to increase the supply amount of ammonia, based on a ratio between the estimated adsorption amount (QNH3) and the actual adsorption amount (QNH3M).

6. The abnormality diagnosis apparatus according to claim 4 or 5, wherein, after the supply amount of ammonia from the ammonia supply apparatus (4) is increased, the electronic control unit (15) is configured to diagnose the catalyst (3) as being abnormal, in a case where the estimated adsorption amount (QNH3) becomes larger than the predetermined adsorption amount (Q1) and where the difference between the estimated adsorption amount (QNH3) and the actual adsorption amount (QNH3M) is larger than a second threshold (QC2).

7. The abnormality diagnosis apparatus according to claim 1, wherein the electronic control unit (15) is configured to diagnose the catalyst (3) as being abnormal, in a case where the estimated adsorption amount (QNH3) is larger than the predetermined adsorption amount (Q1) and where the difference between the estimated adsorption amount (QNH3) and the actual adsorption amount (QNH3M) is larger than a second threshold (QC2).

8. The abnormality diagnosis apparatus according to any one of claims 1 to 3, wherein the electronic control unit (15) is configured to diagnose the catalyst (3) as being abnormal, in a case where the ammonia supply apparatus (4) is diagnosed as being abnormal, where the estimated adsorption amount (QNH3) is larger than the predetermined adsorption amount (Q1) and where the difference between the estimated adsorption amount (QNH3) and the actual adsorption amount (QNH3M) is larger than a second threshold (QC2).

9. The abnormality diagnosis apparatus according to any one of claims 1 to 8, wherein the predetermined adsorption amount (Q1) is an upper limit of the estimated adsorption amount (QNH3) or the actual adsorption amount (QNH3M) that allows the difference between the estimated adsorption amount (QNH3) and the actual adsorption amount (QNH3M) not to be generated or allows the difference between the estimated adsorption amount (QNH3) and the actual adsorption amount (QNH3M) to be in a predetermined range, in a case where the catalyst (3) is abnormal and where the ammonia supply apparatus (4) is normal.

10. A vehicle comprising:
an internal combustion engine (1);
a catalyst (3) which is provided in an exhaust passage (2) of the internal combustion engine (1) and reduces NOx via selective catalytic reduction using ammonia;
an ammonia supply apparatus (4) which supplies ammonia to the catalyst (3);
an adsorption amount detector (30) which detects an actual adsorption amount (QNH3M) that is an amount of ammonia actually adsorbed in the catalyst (3); and
an electronic control unit (15) configured to:
estimate an estimated adsorption amount (QNH3) that is an ammonia adsorption amount in the catalyst (3) on an assumption that the ammonia supply apparatus (4) is normal; and
diagnose the ammonia supply apparatus (4) as being abnormal, in a case where the estimated adsorption amount (QNH3) is equal to or smaller than a predetermined adsorption amount (Q1) and where a difference between the estimated adsorption amount (QNH3) and the actual adsorption amount (QNH3M) is larger than a threshold (QC1).
